**Europäisches Patentamt**

(19) **European Patent Office**

**Office européen des brevets**

(11) Veröffentlichungsnummer: **0 172 339**
**B1**

(12) # EUROPÄISCHE PATENTSCHRIFT

(45) Veröffentlichungstag der Patentschrift:
10.08.88

(51) Int. Cl.⁴: **C 08 F 8/14, C 10 M 107/18**

(21) Anmeldenummer: **85107287.6**

(22) Anmeldetag: **13.06.85**

(54) Verfahren zur Herstellung eines Gleitmittels für die Kunststoff-Verarbeitung.

(30) Priorität: **28.07.84 DE 3427883**

(43) Veröffentlichungstag der Anmeldung:
**26.02.86 Patentblatt 86/9**

(45) Bekanntmachung des Hinweises auf die Patenterteilung:
**10.08.88 Patentblatt 88/32**

(84) Benannte Vertragsstaaten:
**BE DE FR GB IT NL SE**

(56) Entgegenhaltungen:
**DE-A-2 201 862**
**FR-A-2 394 556**

(73) Patentinhaber: **HÜLS AKTIENGESELLSCHAFT, - RSP Patente / PB 15 - Postfach 13 20, D-4370 Marl 1 (DE)**

(72) Erfinder: **Berke, Fritz, Martinistrasse 56, D-4690 Herne 2 (DE)**
Erfinder: **Kehr, Helmut, Dr., Gustav- Sack- Strasse 8, D-4235 Schermbeck (DE)**
Erfinder: **Kühnle, Adolf, Dr., Lipper Weg 195, D-4370 Marl (DE)**

**Beschreibung**

Es ist bekannt, daß man bei der Verarbeitung thermoplastischer Kunststoffe Gleitmittel einsetzt, welche u. a. zur Senkung der erforderlichen Temperatur beitragen. Insbesondere sind Gleitmittel vorgeschlagen worden, welche die Herstellung von Hartfolien aus PVC auf geheizten Walzen und Kalandern erlauben.

Als solche Gleitmittel dienen auch Polyethylenhartparaffine sowie die durch Oxidation daraus hergestellten oxidierten Polyethylenwachse. Die unpolaren Polyethylenhartparaffine sind mit PVC unverträglich und haben daher eine starke äußere Gleitwirkung, während die je nach Oxidationsgrad mehr oder weniger polaren oxidierten Polyethylenwachse bis zu einem gewissen Grade mit PVC verträglich sind. Solche Polyethylenwachse zeigen daher nicht nur eine äußere Gleitwirkung, sondern sie verbessern in der Regel auch die Fließeigenschaften von Hart-PVC-Schmelzen.

Ähnlich wie die oxidierten Polyethylenwachse selbst sind auch solche, die mit einem mehrwertigen Alkohol, z. B. Ethylenglykol, verestert wurden, als PVC-Gleitmittel geeignet. Von einer geringfügig höheren Lichtdurchlässigkeit, die auf eine etwas bessere Verträglichkeit schließen läßt, abgesehen, unterscheiden sich jedoch derartige ethylenglykolveresterte Polyethylenwachse in ihrem Verhaiten gegenüber Hart-PVC nur unwesentlich von nichtveresterten Polyethylenwachsen, wie es die DE-AS-2 201 882 beschreibt. Der in Tabelle 1 und 2 zusammengestellte Vergleichsversuch bestätigt diese Tatsache. Hier ist ein oxidiertes Polyethylenwachs "A" in zwei unterschiedlichen PVC-Prüfrezepturen dem entsprechenden glykolveresterten Polyethylenwachs, "A verestert" gegenübergestellt, wobei sowohl "A" als auch "A verestert" in den technischen Daten mit den in DE-AS-2 201 862 beschriebenen Gleitmitteln übereinstimmen:

"A" mit osmometrischer Molmasse etwa 1 300, Säurezahl 63, Verseifungszahl 112, Tropfpunkt 106°C
"A verestert" mit Säurezahl 32, Verseifungszahl 109

Tabelle 1

Prüfrezeptur:

100  Massenteile Masse PVC (K-wert 58)
0,5  Massenteile Organozinnverbindung (Stabilisator)
1,0  Massenteile Gleitmittel

|  | max. Drehmoment (Plasticorder) | Plastifizierzeit (Plasticorder) | Lichtdurchlässigkeit (2 mm Platten) |
|---|---|---|---|
| "A" | 24,6 Nm | 3,3 min | 68 % |
| "A verestert" | 24,1 Nm | 3,3 min | 74 % |

Tabelle 2

Prüfrezeptur:

100  Massenteile Emulsions-PVC (K-Wert 80)
0,5  Massenteile Diphenylthioharnstoff (Stabilisator)
4,0  Massenteile Gleitmittel

|  | Kraft als Funktion der Drehzahl bei konstanter Spaltbreite (Meßwalzwerk) |
|---|---|
| "A" | 39 kN |
| "A verestert" | 39 kN |

Dieser Befund läßt keine aus dem Veresterungsschritt herrührenden Vorteile erwarten.

Überraschend wurde gefunden, daß die Gleiteigenschaften eines anspruchsgemäß hergestellten und veresterten oxidierten Polyethylenwachses sich vom unveresterten beträchtlich unterscheiden.

Die neue Maßnahmenfolge des Patentanspruches enthält u. a. die Bedingung einer sehr weitgehenden Veresterung. Nun werden zwar in der genannten DE-AS-2 201 862 auch vollständig veresterte Polyethylenwachse beansprucht, sie werden aber nicht offenbart. Vielmehr geht aus der DE-AS-2 432 215 hervor, daß man, wenn man die Lehre der älteren Schrift hefolgt, wegen der schlechten Veresterungsbereitschaft der Polyethylenoxidate lange Reaktionszeiten in Kauf nehmen muß. Aus den Beispielen der DE-AS-2 201 862 folgt, daß man offenbar auch nicht die beanspruchten Temperaturen anwenden kann. Aus allem ist zu schließen, daß auf diesem Wege vollständig veresterte Polyethylenwachse nicht hergestellt und daher in PVC auch nicht geprüft werden konnten.

Die DE-AS-2 201 862 konnte die erfindungsgemäße Arbeitsweise auch nicht nahelegen. Sie geht nämlich von andersartig oxidierten und zusammengesetzten Polyethylenen aus, die sich durch ihren hohen Dicarbonsäure-Gehalt auszeichnen, im niederen Molgewichtsbereich auf Säurezahlen über 80 oxidiert sein müssen und mittels bestimmter Mineralsäuren verestert werden, wobei aber die Veresterung niedermolekularer Polyolefinwachse nicht empfohlen und als Gleitmittel kein Ester, sondern eine Calciumseife vorgestellt wird.

Demgegenüber gründet sich die vorliegende Erfindung auf eine bestimmte Stoff- und Verfahrenswahl, die zu einem überraschenden Fortschritt führt, indem ein anderer Einsatzstoff, nach einem anderen Verfahren umgesetzt, ein anderes Erzeugnis mit verbesserten Eigenschaften ergibt.

Gegenstand der Erfindung ist ein Verfahren zur Herstellung eines Gleitmittels für die Kunststoffverarbeitung durch Veresterung eines oxidierten Polyethylenwachses mit einem mehrwertigen Alkohol der Kettenlänge 2 bis 5 Kohlenstoffatome oder mit einer Mischung eines solchen mehrwertigen alkaholes mit einem Monoalkohol der Kettenlänge 4 bis 20 Kohlenstoffatome, das dadurch gekennzeichnet ist, daß man

a) ein durch Oxidation eines Hartparaffines einer Molmasse von 1 000 bis 4 000 erhaltenes Palyethylenwachs mit einer Säurezahl von 10 bis 35 mg KOH/g einsetzt.

b) als Veresterungskatalysator ein Zinksalz, eine Zinkseife oder das intermediäre Umsetzungsprodukt der Wachssäuren mit Zinkhydroxid in einer Menge, bezogen auf das Reaktionsgemisch, von 0.01 bis 3.0 Gew.-% verwendet und

c) die Veresterung bis zu einer Säurezahl von 8 mg KOH/g oder weniger führt und gleichzeitig mindestens 70 % der durch die Säurezahl erfaßten Sauregruppen verestert.

Die für die Veresterung benötigten oxidierten Polyethylenwachse erhält man durch an sich bekannte Oxidation von Hartparaffinen in der Schmelze bei Temperaturen von 120 bis 250°C, bevorzugt 130 bis 180°C, mittels Luft. Besonders gut gelingt diese Oxidation in Gegenwart von 0,01 bis 3,9 Gew-% eines Zinksalzes, bevorzugt einer Zinkseife wie Zinkstearat.

Die Säurezahl der Oxidate liegt zwischen 10 und 35, bevorzugt 15 bis 30; die Verseifungszahlen betragen hierbei 15 bis 70, bevorzugt 25 bis 60. Man kann auch Teilverseifte Oxidate mit Säurezahlen von 10 bis 20 und Verseifungszahlen von 15 bis 40 verwenden; die Teilverseifung führt man in an sich bekannter Weise aus, indem man, entweder kontinuierlich während der Oxidation, oder nach Beendigung der Oxidation, in der Schmelze die Säuregruppen des Wachsoxidats mit Basen wie Natriumhydroxid, Kaliumhydroxid, Lithiumhydroxid, Calciumhydroxid oder Zinkhydroxid bzw. mit Mischungen dieser Basen teilweise neutralisiert.

Für die Oxidation geeignete Hartparaffine sind in an sich bekannter Weise durch die Ethylenpolymerisation nach Ziegler erhältlich, und zwar gezielt oder als kohlenwasserstofflösliches Nebenprodukt. Diese Hartparaffine besitzen Molmassen von 1 000 bis 4 000, bevorzugt 1 000 bis 3 000.

Für die Veresterung geeignete mehrwertige Alkohole von 2 bis 5 Kohlenstoffatomen sind z. B. 1,2-Ethandiol, 1,2-Propandiol, 1,3-Propandiol, 1,3-Butandiol, 1,4-Butandiol, Glycerin und Pentaerythrit. Es kann auch eine Mischung, hergestellt aus einem Monoalkohol mit endständiger OH-Gruppe, Kettenlänge 4 bis 20 Kohlenstoffatome und einem der o. g. mehrwertigen Alkohole, z. B. eine n-Amylalkohol/1,2-Ethandiol-Mischung, verwendet werden.

Der Alkoholzusatz erfolgt stöchiometrisch zur halben bis doppelten Säurezahl, bevorzugt in Mengen von 0 - 50 % über der zur Säurezahl stöchiometrischen Menge. Gegebenenfalls wird überschüssiger Alkohol nach der Veresterung durch Anlegen von Vakuum aus der Reaktionsmischung entiernt.

Hierbei werden als Katalysatoren Zinksalze wie Zinkchlorid oder Zinkseifen wie Zinkstearat bzw. solche, die intermediär durch Umsetzung von Wachssäuren mit Zinkhydroxid erzeugt wurden, eingesetzt. Die Anteile der Zinkverbindungen, bezogen auf das Reaktionsgemisch, betragen 0,01 bis 3,0 Gew-%.

Die erhaltene Säurezahl des Wachsesters soll 8 oder weniger betragen, bevorzugt etwa 0 bis 6. Mindestens 70 % der durch die Säurezahl erfaßten Wachssäuren müssen verestert sein.

Die Beispiele lassen die überraschenden Eigenschaften der erfindungsgemäßen Wachsester erkennen.

**Beispiel 1**

Prüfrezeptur:

100 Massenteile Emulsions-PVC (K-wert 80)
0,5 Massenteile Diphenylthioharnstoff (Stabilisator)
4,0 Massenteile Gleitmittel

**0 172 339**

| | Kraft als Funktion der Drehzahl bei konstanter Spaltbreite (Meßwalzwerk) |
|---|---|
| Polyethylenwachs "B" (osmometrische Molmasse ca. 1 400 Säurezahl 30, Verseifungszahl 53, Tropfpunkt 112° C) | 37 kN |
| Polyethylenwachs "B" butandiolver estert (Säurezahl 4, Verseifungszahl 50) | 28 kN |
| Polyethylenwachs "C" (osmometrische Molmasse ca. 1 300, Säurezahl 25, Verseifungszahl 43, Tropfpunkt 107° C) | 36 kN |
| Polyethylenwachs "C", ethylenglykolver- estert (Säurezahl 2, Verseifungszahl 41) | 26 kN |
| Polyethylenwachs "C", partiell ethylenglykolverestert (Säurezahl 14, Verseifungszahl 42) | 32 kN |
| Polyethylenwachs "D", (osmometrische Molmasse ca. 1 300, Säurezahl 18, Verseifungszahl 32, Tropfpunkt 112° C) | 34 kN |
| Polyethylenwachs "D", ethylenglykolverestert (Säurezahl 5, Verseifungszahl 31) | 23 kN |

estert hat statt praktisch vollständig entsprechend der Erfindung.

**Beispiel 2**

Tabelle 4

Prüfrezeptur:

100 Massenteile Emulsions-PVC (K-Wert 80)
0,5 Massenteile Diphenylthioharnstoff
4,0 Massenteile Gleitmittel

4

**0 172 339**

|  | Kraft als Funktion der Drehzahl bei konstanter Spaltbreite (Meßwalzwerk) |
|---|---|
| Montansäureester (ethylenglykolverestert Säurezahl 10 bis 20, Verseifungszahl 155 bis 175) | 28 kN |
| Montansäureester (glycerinverestert, Säurezahl ca. 25, Verseifungszahl ca. 150) | 30 kN |
| Polyethylenwachs "B", butandiolverestert (Säurezahl 7, Verseifungszahl ca. 50) | 28 kN |
| Polyethylenwachs "C" ethylenglykolverestert (Säurezahl 2, Verseifungszahl 41) | 26 kN |
| Polyethylenwachs "D", ethylenglykolverestert glykolverestert (Säurezahl 5, Verseifungszahl 31) | 23 kN |

Hier übertreffen die Schmiereigenschaften der gefundenen Polyethylenwachsester sogar die der Montansäureester. Dies äußert sich nicht nur in einem niedrigeren Kraftaufwand bei Messungen auf dem Meßwalzwerk, sondern auch in einer höheren Thermostabilität bei einer Dauerwalzprüfung (180°C). Während sich beispielsweise diphenylthioharnstoffstabilisierte, montansäureesterhaltige Hart-PVC-Mischungen nach 7 bis 8 Minuten deutlich gelb färben, treten bei entsprechenden Hart-PVC-Mischungen mit den gefundenen Polyethylenwachsestern unter gleichen Bedingungen keine wesentlichen Farbveränderungen auf.

**Patentanspruch**

Verfahren zur Herstellung eines Gleitmittels für die Kunststoffverarbeitung durch Veresterung eines oxidierten Polyethylenwachses mit einem mehrwertigen Alkohol der Kettenlänge 2 bis 5 Kohlenstoffatome oder mit einer Mischung eines solchen mehrwertigen Alkoholes mit einem Monoalkohol der Kettenlänge 4 bis 20 Kohlenstoffatome, dadurch gekennzeichnet, daß man
a) ein durch Oxidation eines Hartparaffines einer Molmasse von 1 000 bis 4 000 erhaltenes Polyethylenwachs mit einer Säurezahl von 10 bis 35 mg KOH/g einsetzt.
b) als Veresterungskatalysator ein Zinksalz; eine Zinkseife oder das intermediäre Umsetzungsprodukt der Wachssäuren mit Zinkhydroxid in einer Menge, bezogen auf das Reaktionsgemisch, von 0,01 bis 3.0 Gew.-% verwendet und
c) die Veresterung bis zu einer Säurezahl von 8 mg KOH/g oder weniger führt und gleichzeitig mindestens 70 % der durch die Säurezahl erfaßten Säuregruppen verestert.

**Claim**

A process for the production of a lubricant for plastics processing, involving esterifying an oxidized polyethylene wax using a polyhydric alcohol of chain length 2 to 5 carbon atoms, or using a mixture of a polyhydric alcohol of this type with a monoalcohol of chain length 4 to 20 carbon atoms, characterised in that
a) a polyethylene wax of acid number 10 to 35 mg of KOH/g obtained by oxidation of a hard paraffin of molecular weight 1000 to 4000 is employed,
b) as esterification catalyst there is used 0.01 to 3.0 % by weight, relative to the reaction mixture, of a zinc salt, a zinc soap or the intermediate product in the reaction of wax acids with zinc hydroxide, and
c) the esterification results in an acid number of 8 mg of KOH/g or less, and at the same time at least 70 % of the acid groups covered by the acid number are esterified.

5

**Revendication**

Procédé de préparation d'un lubrifiant pour le traitement des matières plastiques, par estérification d'une cire oxydée de polyéthylène avec un poly-alcool dont la chaîne comporte de 2 à 5 atomes de carbone, ou avec un mélange d'un tel poly-alcool avec un mono-alcool dont la chaîne comporte de 4 à 20 atomes de carbone, caractérisé par le fait que

a) l'on utilise une cire de polyéthylène obtenue par oxydation d'une paraffine dure d'une masse moléculaire de 1 000 à 4 000, dont l'indice d'acide est de 10 à 35 mg de KOH par gramme.

b) l'on emploie, comme catalyseur d'estérification, un sel de zinc, un savon de zinc ou le produit de réaction intermédiaire des acides cireux sur de l'hydroxyde de zinc, ce dans une quantité qui, relativement au mélange réactionnel, est de 0,01 à 3,0 % en poids, et

c) l'on conduit l'estérification jusqu'à avoir un indice d'acide de 8 mg de KOH par gramme ou moins et que l'on estérifie simultanément au moins 70 % des groupes acide intéressés par l'indice d'acide.